# EUROPÄISCHE PATENTANMELDUNG

(11) **EP 4 620 287 A1**
(43) Veröffentlichungstag der Anmeldung: **24.09.2025**
(21) Anmeldenummer: 25155309.5
(22) Anmeldetag: 31.01.2025
(51) Int. Cl.: A01D 41/06, A01D 41/14, A01D 57/03

(54) **SCHNEIDWERK**

(30) Priorität: 22.03.2024 DE 102024108255
(71) Anmelder: CLAAS Hungária Kft., 5200 Törökszentmiklós (HU)
(72) Erfinder: Szakallas, Tibor, 2750 Nagykörös (HU)
(74) Vertreter: Budach, Steffen

(57) **Zusammenfassung**

Die vorliegende Erfindung betrifft ein Schneidwerk (1), umfassend einen sich zwischen Seitenteilen (3) erstreckenden Rahmen (2) sowie eine sich zwischen den Seitenteilen (3) erstreckende Haspel (5), die zumindest zwei Haspelsegmente (5A, 5B) aufweist, die an zumindest einem zwischen diesen angeordneten Tragarm (16) angeordnet sind, wobei jedes Haspelsegment (5A, 5B) ein Haspeltragrohr (11A, 11B), mehrere sich über die Breite des jeweiligen Haspelsegmentes (5A, 5B) erstreckende Zinkenstangen (13) mit an den Zinkenstangen (13) mit Abstand zueinander angeordneten Haspelzinken (14, 14') umfasst, wobei im Endbereich zweier benachbarter Haspelsegmente (5A, 5B) an einander zugewandten Enden der Haspeltragrohre (11A, 11B)jeweils wenigstens ein Endzinken (20, 20B) an den Zinkenstangen (13) angeordnet ist, wobei der jeweilige Endzinken (20A, 20B) nur eines der benachbarten Haspelsegmente (5A, 5B) in Axialrichtung (23) der Haspeltragrohre (11A, 11B) relativbeweglich auf diesen angeordnet ist, wobei dem Endbereich des Haspelsegmentes (5A, 5B) mit den axial verschiebbaren Endzinken (20A, 20B) eine Verstelleinrichtung (22) zum axialen Verschieben der Endzinken (20A, 20B) zugeordnet ist.

## Beschreibung

Die vorliegende Erfindung betrifft ein Schneidwerk gemäß dem Oberbegriff des Anspruches 1.

Schneidwerke der eingangs genannten Art umfassen einen sich zwischen Seitenteilen erstreckenden Rahmen sowie eine sich zwischen den Seitenteilen erstreckende Haspel, die zumindest zwei Haspelsegmente aufweist, die an zumindest einem zwischen diesen angeordneten Tragarm angeordnet sind. Jedes Haspelsegment weist ein Haspeltragrohr, mehrere sich über die Breite des Haspelsegmentes durchgehend erstreckende Zinkenstangen mit an den Zinkenstangen mit im Abstand zueinander angeordneten Haspelzinken auf, wobei im Endbereich zweier benachbarter Haspelsegmente an einander zugewandten Enden der Haspeltragrohre jeweils wenigstens ein Endzinken an den Zinkenstangen angeordnet ist. Zwischen den benachbarten Haspelsegmenten bildet sich durch den zumindest einen zwischen diesen angeordneten Tragarm ein lateraler Abstand aus, in welchem die benachbarten Endzinken einen größeren Abstand zueinander aufweisen als die Abstände der Haspelzinken eines jeden Haspelsegmentes zueinander.

In diesem Zwischenbereich ist insbesondere die Gutannahme und Weiterleitung durch die benachbarten Endzinken der beiden Haspelsegmente aufgrund des größeren Abstandes zueinander geringer.

Ein Schneidwerk der eingangs genannten Art ist aus der EP 3 585 146 B1 bekannt. Darin wird zur Verbesserung der Gutannahme im Zwischenbereich vorgeschlagen, Endzinken an einer Schwenkachse am äußeren Ende um eine Schwenkachse in eine unter einem Winkel von weniger als 90° zur Zinkenstange geneigte Betriebsposition zu schwenken, in welcher die Endzinken in den Zwischenbereich hineinragen. Die einander gegenüberliegenden Endzinken der benachbarten Haspelsegmente sind mit ihren Enden einander zugewandt, wodurch der Abstand zwischen diesen minimiert ist. Um die Endzinken in dieser Betriebsposition zu halten, sind diese jeweils durch ein Vorspannelement vorgespannt. Erreichen die Endzinken aufgrund der Drehung der Haspelsegmente den zwischen diesen angeordneten Tragarm, so führt der Kontakt mit dem Tragarm dazu, dass die Endzinken entgegen der Vorspannkraft aus dem Zwischenbereich herausgeschwenkt werden.

Weiterhin ist aus der EP 3 669 636 B1 ein Schneidwerk mit einem durchgehenden Haspeltragrohr bekannt, auf welchem zwei Haspelsegmente benachbart zueinander angeordnet sind. Dort wird vorgeschlagen, die Zinkenstangen eines jeden Haspelsegmentes durch eine nach dem Prinzip einer Taumelscheibe um das Haspeltragrohr schwenkbare schräg angestellte Scheibe axial zu verschieben. Hierzu sind zwei schräg angestellte Scheiben vorgesehen, die spiegelbildlich zueinander auf dem jeweiligen Haspeltragrohr angeordnet sind. Am zwischen den Haspelsegmenten angeordneten Tragarm sind Konsolen unterschiedlicher Länge unter einem Winkel geneigt angeordnet, an deren Enden Rollen angeordnet sind, die auf den Scheiben abrollen und die Taumelbewegung derselben bewirken. Dabei erfährt in Abhängigkeit von der Position beim Drehen der Haspelsegmente die jeweilige Zinkenstange eine zyklische Abstandsänderung zur benachbarten Zinkenstange, wobei sich die Endzinken einander annähern oder voneinander entfernen. Neben dem komplexen Aufbau erfordert diese Lösung einen großen Bauraum, um die Taumelbewegung der schräg angestellten Scheiben zu ermöglichen.

Ausgehend vom vorstehend genannten Stand der Technik liegt der Erfindung die Aufgabe zugrunde, ein Schneidwerk der eingangs genannten Art weiterzubilden, welches sich durch einen kostengünstigeren, einen geringeren Bauraumbedarf aufweisenden Mechanismus zur Verringerung des axialen Abstandes zwischen den Endzinken benachbarter Haspelsegmente auszeichnet. Zudem sollten die Haspelsegmente gegeneinander verschwenkbar ausgeführt sein, d.h. dass diese bei einem Auftreten von Bodenunebenheiten zur Bodenanpassung zueinander schräg stehen können.

Diese Aufgabe wird erfindungsgemäß durch ein Schneidwerk mit den Merkmalen des Anspruches 1 gelöst. Vorteilhafte Weiterbildungen sind Gegenstand der abhängigen Ansprüche.

Gemäß dem Anspruch 1 wird ein Schneidwerk vorgeschlagen, umfassend einen sich zwischen zwei Seitenteilen erstreckenden Rahmen sowie eine sich zwischen den Seitenteilen erstreckende Haspel, die zumindest zwei Haspelsegmente aufweist, die an zumindest einem zwischen diesen angeordneten Tragarm angeordnet sind, wobei jedes Haspelsegment ein Haspeltragrohr, mehrere sich über die Breite des Haspelsegmentes erstreckende Zinkenstangen mit an den Zinkenstangen mit Abstand zueinander angeordneten Haspelzinken umfasst, wobei im Endbereich zweier benachbarter Haspelsegmente an einander zugewandten Enden der Haspeltragrohre jeweils wenigstens ein Endzinken an den Zinkenstangen angeordnet ist. Erfindungsgemäß ist vorgesehen, dass der jeweilige Endzinken nur eines der benachbarten Haspelsegmente in Axialrichtung der Haspeltragrohre relativbeweglich auf diesen angeordnet ist, wobei dem Endbereich des Haspelsegmentes mit den axial verschiebbaren Endzinken eine Verstelleinrichtung zum axialen Verschieben der Endzinken zugeordnet ist.

Die Verstelleinrichtung ist nur an einem von zwei benachbarten Haspelsegmenten angeordnet, sodass hierdurch bereits eine Bauraumreduzierung gegenüber dem Stand der Technik erreicht wird. Ein weiterer Aspekt besteht darin, dass nur der jeweilige Endzinken an der Zinkenstange bewegt wird. Als Endzinken ist derjenige Haspelzinken auf einer Zinkenstange bezeichnet, der dem gegenüberliegenden Haspelsegment unmittelbar benachbart ist. Mittels der Verstelleinrichtung wird nur der Abstand des verschiebbaren Endzinkens zum nächsten benachbarten ortsfest an der Zinkenstange angeordneten Haspelzinken verändert.

Insbesondere kann die Verstelleinrichtung ein Kurvenbahnsegment aufweisen, welches den axial verschiebbaren Endzinken des Haspelsegmentes eine eindimensionale Horizontalbewegung in Axialrichtung der Haspeltragrohre respektive der Zinkenstangen aufprägt. Durch die Form und die Dimensionierung des Kurvenbahnsegmentes kann die eindimensionale Horizontalbewegung variiert werden.

Weiterhin kann die Verstelleinrichtung endseitig auf den Zinkenstangen angeordnete in Axialrichtung verschiebbare rohrförmige Elemente aufweisen, an denen der jeweilige Endzinken angeordnet ist, wobei die rohrförmigen Elemente durch die Zinkenstangen axial geführt sind.

Bevorzugt ist der wenigstens eine Endzinken am dem Kurvenbahnsegment zugewandten äußeren Ende des rohrförmigen Elementes angeordnet. Durch diese Position lässt sich der axiale Verstellweg maximieren, um den Abstand der Endzinken benachbarter Haspelsegmente zueinander im Zwischenbereich zu reduzieren.

Des Weiteren kann das jeweilige rohrförmige Element mit einem Abtastelement verbunden sein, welches das Kurvenbahnsegment abtastet. Vorzugsweise kann das Abtastelement eine Kugel oder Halbkugel sein. Die Kugel oder Halbkugel kann in einer Aufnahme angeordnet sein. Die Kugel oder Halbkugel kann abschnittsweise über die Aufnahme hinausragen.

Gemäß einer Weiterbildung kann an dem rohrförmigen Element ein zusätzlicher Haspelzinken angeordnet sein, der zum Endzinken axial beabstandet angeordnet ist. Der zusätzliche Haspelzinken kann zwischen dem Endzinken und dem zu diesem benachbarten ortsfesten Haspelzinken an dem rohrförmigen Element angeordnet sein. Durch die axiale Verschiebung des rohrförmigen Elementes entlang der Zinkenstange und damit des zusätzlichen Haspelzinkens relativ zum benachbarten ortsfesten Haspelzinken auf der Zinkenstange kann die Gutannahme im Zwischenbereich weiter verbessert bzw. unterstützt werden. Der zusätzliche Haspelzinken kann durch Befestigungsmittel an dem rohrförmigen Element angeordnet sein, welche einen Austausch und/oder ein Nachrüsten des zusätzlichen Haspelzinkens ermöglichen.

Insbesondere kann die Verstelleinrichtung Federelemente umfassen, welche das jeweilige Abtastelement mit einer Kraft beaufschlagen, die das jeweilige Abtastelement in einer am Kurvenbahnsegment anliegenden Stellung hält.

Dabei kann zumindest ein Federelement auf der jeweiligen Zinkenstange zwischen dem Endzinken und dem zu diesem unmittelbar benachbarten Haspelzinken angeordnet sein.

Bevorzugt kann das Kurvenbahnsegment an dem zwischen den Haspelsegmenten angeordneten Tragarm angeordnet sein. Das Kurvenbahnsegment ist bevorzugt auf dem Haspeltragrohr des Haspelsegmentes angeordnet, an welchem die axial verschiebbaren Endzinken angeordnet sind.

Insbesondere kann das Kurvenbahnsegment an einem, insbesondere teleskopierbaren, Abschnitt des Tragarmes angeordnet sein oder das Kurvenbahnsegment und der, insbesondere teleskopierbare, Abschnitt des Tragarmes können einteilig ausgeführt sein. Die Anordnung des Kurvenbahnsegmentes an dem zwischen den Haspelsegmenten angeordneten Tragarm ist vorteilhaft, um dessen Bewegungen in vertikaler und/oder horizontaler Richtung folgen zu können. Die Haspelsegmente werden in Abhängigkeit von der Erntegutart und/oder den Erntebedingungen in ihrer Position durch Verstellen in vertikaler und/oder horizontaler Richtung angepasst. Gemäß einer bevorzugten Weiterbildung kann das Kurvenbahnsegment an einem teleskopierbaren Abschnitt des Tragarmes angeordnet sein, so dass das Kurvenbahnsegment den Verstellbewegungen des Haspelsegmentes folgen kann.

Gemäß einer bevorzugten Weiterbildung kann das Kurvenbahnsegment eine kreisringförmige Abtastfläche aufweisen, die durch zwei rampenförmige Abschnitte in einen ersten Führungsabschnitt und einen zweiten Führungsabschnitt unterteilt ist, wobei der erste Führungsabschnitt eine größere axiale Erstreckung in Richtung des Haspeltragrohres aufweist als der zweite Führungsabschnitt. Die wechselweise axiale Bewegung der Endzinken in Richtung der Endzinken des benachbarten Haspelsegmentes oder in entgegengesetzter Richtung erfolgt dabei in Abhängigkeit von der Position der Abtastelemente auf den Führungsabschnitten. So beeinflusst die Rotation des Haspelsegmentes die Richtung und den Verstellweg der Verschiebung der Endzinken. Dabei variiert der Verstellweg in Umfangsrichtung gesehen zwischen den einzelnen Endzinken des Haspelsegmentes.

Weiterhin kann der erste Führungsabschnitt halbringförmig ausgebildet sein und sich im Wesentlichen in einem Bereich oberhalb des Haspeltragrohres abschnittsweise in Umfangsrichtung erstrecken. Der zweite Führungsabschnitt erstreckt sich bevorzugt zumindest über die untere Hälfte des Kurvenbahnsegmentes.

Weiter bevorzugt können die rampenförmigen Abschnitte ausgehend vom ersten Führungsabschnitt in Richtung des zweiten Führungsabschnittes einen sich verjüngen Verlauf aufweisen und zwischen sich einen zum ersten Führungsabschnitt im Wesentlichen parallelen Verlauf. Der sich zwischen den rampenförmigen Abschnitten ausbildende ebene Abschnittsverlauf des zweiten Führungsabschnittes ist gegenüber dem ersten Führungsabschnitt in Axialrichtung zurückversetzt. Die Höhendifferenz zwischen dem ersten Führungsabschnitt und dem den ebenen Abschnittsverlauf aufweisenden zweiten Führungsabschnitt ermöglicht eine axiale Verschiebung der Endzinken in gleicher Größenordnung. Bevorzugt können die axial verschiebbaren Endzinken in einem Bereich von ± 60 mm bis ± 100 mm, besonders bevorzugt in einem Bereich von ± 70 mm bis ± 90 mm, verschiebbar sein. Denkbar ist eine bogenförmige Ausgestaltung des sich zwischen den rampenförmigen Abschnitten ausbildenden Bereiches des zweiten Führungsabschnittes.

Insbesondere kann jedem rohrförmigen Element eine Stützanordnung zugeordnet sein. Die Stützanordnung kann dazu dienen, das Abtastelement unabhängig von seiner Position beim Rotieren des Haspelsegmentes in seiner an dem Kurvenbahnsegment anliegenden, abtastenden Stellung zu halten. Zudem kann durch die Stützanordnung ein Verkanten des jeweiligen rohrförmigen Elementes beim axialen Verschieben in Richtung des benachbarten Haspelsegmentes vermieden werden, wenn sich das Abtastelement entlang des ersten und zweiten Führungsabschnittes entlang des Kurvenbahnsegmentes bewegt.

Dabei kann die Stützanordnung eine sich radial zum Haspeltragrohr erstreckende Koppelstange, eine parallel zum Haspeltragrohr verlaufende und an dem Haspeltragrohr angeordnete Führungsstange sowie eine Vorspannanordnung umfassen. Die sich in radialer Richtung erstreckende Koppelstange verbindet die Führungsstange, die Vorspannanordnung und das rohrförmige Element miteinander. Die Komponenten der Stützanordnung sind derart ausgeführt, dass diese in Abhängigkeit von ihrer Position in Umfangsrichtung des Kurvenbahnsegmentes eine Relativbewegung in Axialrichtung des jeweiligen Haspeltragrohres ermöglichen.

Die vorliegende Erfindung wird nachstehend anhand eines in den Zeichnungen dargestellten Ausführungsbeispieles näher erläutert.

Es zeigen:
- Fig. 1: schematisch und exemplarisch ein Schneidwerk für eine selbstfahrende Erntemaschine;
- Fig. 2: schematisch und exemplarisch eine Draufsicht auf das Schneidwerk gemäß Fig. 1 in vereinfachter Darstellung;
- Fig. 3: schematisch und exemplarisch eine perspektivische Teilansicht von einander zugewandten Endabschnitten zumindest zweier Haspelsegmente gemäß Fig. 2;
- Fig. 4: schematisch und exemplarisch eine perspektivische Ansicht einer im Zwischenbereich zweier benachbarter Haspelsegmente angeordneten Verstelleinrichtung gemäß Fig. 3; und
- Fig. 5: schematisch und exemplarisch jeweils eine Detailansicht eines auf einem Zinkenrohr angeordneten Endzinkens, eines Abtastelementes der Verstelleinrichtung sowie eine perspektivische Ansicht des Kurvenbahnsegmentes.

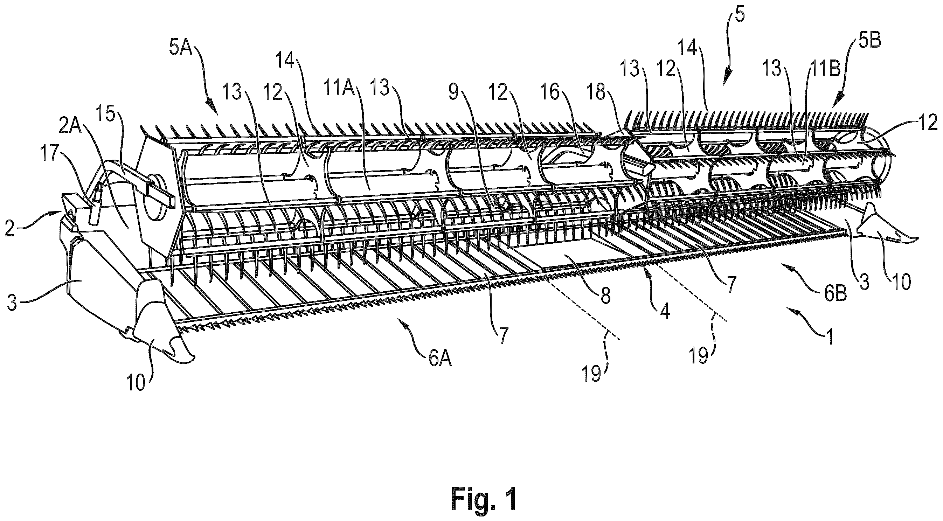

Fig. 1 zeigt schematisch und exemplarisch ein als Bandschneidwerk ausgeführtes Schneidwerk 1 für eine selbstfahrende Erntemaschine, insbesondere einen Mähdrescher, in einer perspektivischen Ansicht schräg von vorn. Das Schneidwerk 1 umfasst einen Rahmen 2 mit einer Rückwand 2A. Der Rahmen 2 und die Rückwand 2A erstrecken sich zwischen zwei äußeren Seitenteilen 3, die im Wesentlichen senkrecht zur Rückwand 2A orientiert sind. Ein, insbesondere flexibler, Messerbalken 4 erstreckt sich entlang einer Vorderkante des Schneidwerks 1. Das Schneidwerk 1 kann auch einen starren Schneidtisch aufweisen, oberhalb dessen Querförderschnecken zur Förderung von Erntegut vorgesehen sind.

Eine zumindest zwei Haspelsegmente 5A, 5B aufweisende Haspel 5 ist über dem Messerbalken 4 gehalten, um von dem Messerbalken 4 geschnittenes Erntegut in Richtung des Schneidwerkes 1 zu ziehen. Das Schneidwerk 1 weist Seitenabschnitte 6A, 6B auf, auf welchen lateral umlaufende Förderbändern 7 angeordnet sind. Die Förderbänder 7 dienen dazu, das auf sie durch die Haspel 5 gezogene Erntegut einem Mittelabschnitt 8 und einer dort in der Rückwand 2A des Rahmens 2 gebildeten Öffnung 9 und einem sich an diese Öffnung 9 anschließenden, in der Figur nicht gezeigten Einzugskanal der Erntemaschine zuzuführen. Zusätzlich oder alternativ kann zumindest eine den Seitenabschnitten 6A, 6B zugeordnete Förderschnecke vorgesehen sein, welche das Erntegut dem Mittelabschnitt 8 zuführen. Im Mittelabschnitt 8 kann zusätzlich oder alternativ ein weiteres Förderband angeordnet sein, welches von den Seitenabschnitten 6A, 6B kommendes Erntegut der Öffnung 9 zuführt. Der Messerbalken 4 kann zwei oszillierend angetriebene Abschnitte umfassen, die sich jeweils von einem rechten bzw. linken Halmteiler 10 an der Spitze der Seitenteile 3 bis zum Mittelabschnitt 8 erstrecken.

Die zumindest zwei Haspelsegmente 5A, 5B der Haspel 5 sind im Wesentlichen baugleich ausgeführt und können spiegelbildlich oder mit gleicher Orientierung angeordnet sein, so dass die nachfolgende Beschreibung im Wesentlichen für beide Haspelsegmente 5A, 5B gilt.

Das Haspelsegment 5A ist in horizontaler und vertikaler Richtung verstellbar und unterstützt die gleichmäßige Erntegutförderung. Das Haspelsegment 5A umfasst ein axial angeordnetes und angetriebenes Haspeltragrohr 11A, auf dem in Abständen Haspelsterne 12 befestigt sind. Am äußeren Umfang der Haspelsterne 12 sind mehrere, sich über die Breite des Haspelsegmentes 5A erstreckende durchgehende Zinkenstangen 13 angeordnet. An den Zinkenstangen 13 sind mit Abstand zueinander angeordnete Haspelzinken 14 befestigt. Die Haspelzinken 14 können als Einfach- oder Doppelzinken ausgebildet und aus federndem Stahl oder Kunststoff hergestellt sein. Die Zinkenstangen 13 bestehen aus einem gewalzten oder stranggepressten Hohlprofil.

Das Haspelsegment 5A ist endseitig an einem äußeren verschwenkbaren Tragarm 15 und an einem verschwenkbaren zwischen den benachbarten Haspelsegmenten 5A, 5B angeordneten Tragarm 16 angeordnet. An dem zwischen den benachbarten Haspelsegmenten 5A, 5B angeordneten Tragarm 16 können beide Haspelsegmente 5A, 5B mit ihren einander zugewandten Enden angeordnet sein.

Zur Einstellung des Haspelsegmentes 5A ist an dem Rahmen 2 und den Tragarmen 15, 16 jeweils ein Linearaktor 17, vorzugsweise ein Hydraulikzylinder, angelenkt, mit denen die Tragarme 15, 16 um einen Gelenkpunkt drehend verschwenkt werden, um die Höhenlage des Haspelsegmentes 5A zu ändern. Zusätzlich können zwischen den Tragarmen 15, 16 und dem Haspelsegment 5A zwei weitere - nicht dargestellte - Linearaktoren angebracht sein, mit denen die Lage des Haspelsegmentes 5A in horizontaler Richtung in Bezug auf den Messerbalken 4 eingestellt wird. Der Abstand des Haspelsegmentes 5A zur Vorderkante des Messerbalkens 4 kann somit in horizontaler Richtung variiert werden, um an unterschiedliche Erntegutarten und/oder Erntebedingungen anpassbar zu sein.

Zwischen den zumindest zwei Haspelsegmenten 5A, 5B kann eine Zwischenscheibe 18 angeordnet sein, die auf einem Haspeltragrohr 11A, 11B eines der zumindest zwei Haspelsegment 5A, 5B angeordnet ist. Im dargestellten Ausführungsbeispiel ist die Zwischenscheibe 18 auf dem Haspeltragrohr 11B des Haspelsegmentes 5B angeordnet. Die Darstellung in Fig. 1 zeigt lediglich beispielhaft eine Randscheibe, die auf dem äußeren, dem Seitenteil 3 zugewandten Ende des Haspeltragrohres 11A des Haspelsegmentes 5A angeordnet ist.

Der Messerbalken 4 sowie die Seitenabschnitte 6A, 6B des als Bandschneidwerk ausgeführten Schneidwerks 1 können dazu eingerichtet sein, einer Bodenkontur in bodenkopierender Weise folgen. Hierzu können der Messerbalken 4 sowie die Seitenabschnitte 6A, 6B in vertikaler Richtung eine abschnittsweise Auslenkung erfahren. Die Seitenabschnitte 6A, 6B können voneinander unabhängig um jeweils eine zu den Seitenteilen 3 parallele Schwenkachse 19 gegenüber dem Mittelabschnitt 8 verschwenken. Um die Ernteguterfassung durch die Haspelsegmente 5A, 5B bei der voneinander unabhängigen Bodenanpassung erfolgenden Verschwenkung der Seitenabschnitte 6A, 6B zu gewährleisten, folgt das jeweilige Haspelsegment 5A, 5B der Schwenkbewegung des jeweiligen Seitenabschnittes 6A, 6B entsprechend.

Dies kann dazu führen, dass die Seitenabschnitte 6A, 6B bezüglich des Mittelabschnitts 8 schräg stehen. Dabei ist die Schrägstellung der Seitenabschnitte 6A, 6B davon abhängig, ob die Seitenabschnitte 6A, 6B bergauf und/oder bergab geneigt sind. In diesen Fällen vergrößert sich der seitliche Abstand zwischen benachbarten Endzinken 20A, 20B im zwischen den beiden Haspelsegmenten 5A, 5B befindlichen Zwischenbereich 21 entweder im oberen, dem Messerbalken 4 abgewandten, oder im unteren, dem Messerbalken 4 zugewandten, Bereich.

Der Zwischenbereich 21 bezeichnet einen zwischen den zumindest zwei benachbarten Haspelsegmenten 5A, 5B befindlichen Bereich, in welchem die Haspeltragrohre 11A, 11B am gemeinsamen Tragarm 16 der benachbarten Haspelsegmente 5A, 5B angeordnet sind. Die Anordnung an dem gemeinsamen Tragarm 16 kann in der Weise erfolgen, dass die Haspeltragrohre 11A, 11B eine Vertikalbewegung und/oder eine Horizontalbewegung ausführen können. Aufgrund der vom gemeinsamen Tragarm 16 auf die benachbarten Haspelsegmente 5A, 5B übertragene Vertikalbewegung können die Haspelsegmente 5A, 5B den Schwenkbewegungen der Seitenabschnitte 6A, 6B bezüglich des Mittelabschnitts 8 folgen.

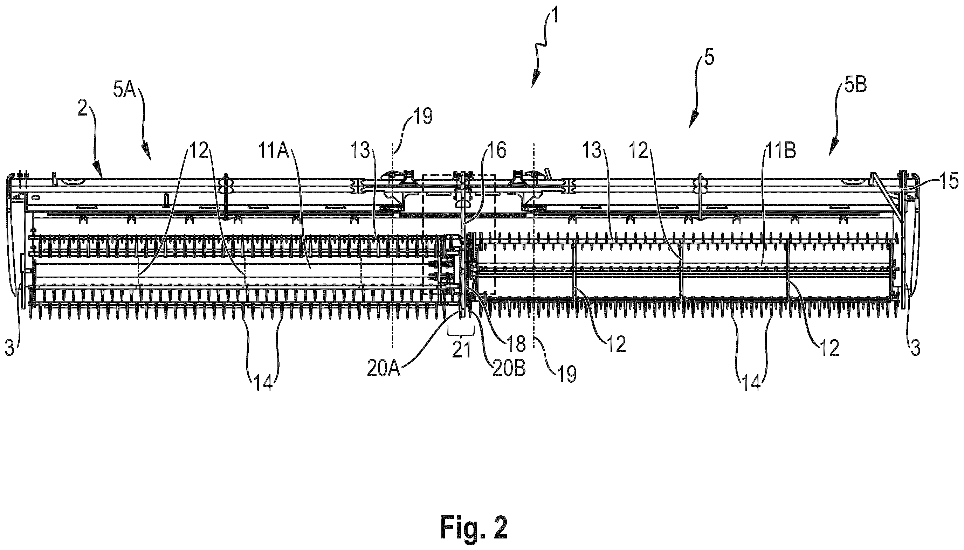

Mit Endzinken 20A, 20B sind die Haspelzinken 14 der zumindest zwei Haspelsegmente 5A, 5B bezeichnet, die an den einander zugewandten Endabschnitten der zumindest zwei Haspelsegmente 5A, 5B in Umfangsrichtung verteilt endseitig an den jeweiligen Zinkenstangen 13 angeordnet sind, wie in Fig. 2 dargestellt. Die Endzinken 20A, 20B sind somit im Zwischenbereich 21 zwischen den beiden Haspelsegmente 5A, 5B angeordnet. Die Endzinken 20A, 20B unterscheiden sich baulich nicht von den übrigen Zinken 14 an der Haspel 5.

In Fig. 2 ist schematisch und exemplarisch eine Draufsicht auf das Schneidwerk 1 gemäß Fig. 1 in vereinfachter Darstellung gezeigt. Um im Zwischenbereich 21 die Gutannahme durch die Endzinken 20A, 20B zu verbessern, ist vorgesehen, dass die Endzinken 20A, 20B nur eines der beiden Haspelsegmente 5A, 5B in horizontaler Richtung, d.h. zum Messerbalken 4 parallel, verschiebbar auf den Zinkenstangen 13 angeordnet sind. Im dargestellten Ausführungsbeispiel sind die verschiebbaren Endzinken 20A am Haspelsegment 5A angeordnet. Die Ausgestaltung der Endzinken 20B als axial verschiebbare Endzinken des Haspelsegmentes 5B anstelle der Endzinken 20A ist entsprechend ausgeführt.

Dabei ist vorgesehen, dass sich die Endzinken 20A abschnittsweise sowohl in Richtung auf das benachbarte Haspelsegmente 5B zu als auch in Gegenrichtung, vom benachbarten Haspelsegment 5B weg, bewegen. Der sich in Abhängigkeit von der Schrägstellung der benachbarten Haspelsegmente 5A, 5B zueinander verändernde laterale Abstand zwischen den benachbarten Endzinken 20A, 20B wird durch das Verschieben der Endzinken 20A des Haspelsegmentes 5A zumindest teilweise kompensiert.

Die Bewegung der Endzinken 20A in die eine oder andere Richtung erfolgt dabei in Abhängigkeit von der Schrägstellung der benachbarten Haspelsegmente 5A, 5B zueinander. Weiterhin beeinflusst die Rotation der Haspelsegmente 5A, 5B die Richtung und den Verstellweg der Verschiebung der Endzinken 20A. Der Verstellweg variiert in Umfangsrichtung gesehen zwischen den einzelnen Endzinken 20A des Haspelsegmentes 5A.

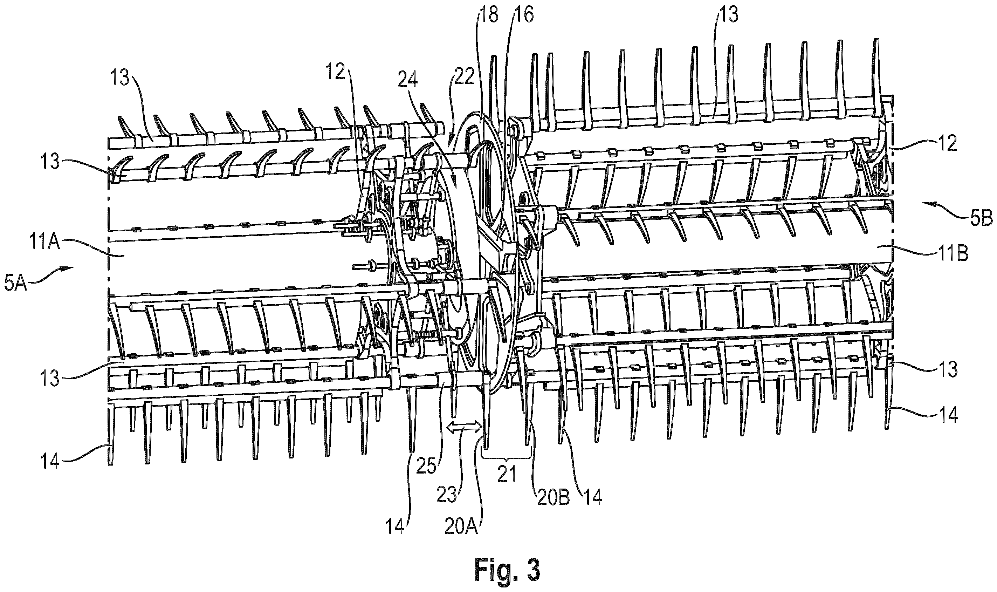

Die Darstellung in Fig. 3 zeigt schematisch und exemplarisch eine perspektivische Teilansicht der einander zugewandten Endabschnitte der zumindest zwei Haspelsegmente 5A, 5B gemäß Fig. 2 in einer Ansicht von oben.

Dem Endbereich des Haspelsegmentes 5A mit den axial verschiebbaren Endzinken 20A ist eine Verstelleinrichtung 22 zum axialen Verschieben der Endzinken 20A zugeordnet. Durch die Verstelleinrichtung 22 wird den Endzinken 20A in durch den Pfeil veranschaulichter Axialrichtung 23 der Zinkenstangen 13 eine Horizontalbewegung aufgeprägt.

Durch die Verstelleinrichtung 22 werden die Endzinken 20A in Abhängigkeit von ihrer Position des rotierenden Haspelsegmentes 5A bezüglich des Messerbalkens 4 in Axialrichtung der Zinkenstange 13, an der diese angeordnet sind, hin- und herbewegt.

Hierzu weist die Verstelleinrichtung 22 ein Kurvenbahnsegment 24 auf, welches den axial verschiebbaren Endzinken 20A des Haspelsegmentes 5A die eindimensionale Horizontalbewegung in Axialrichtung 23 der Zinkenstangen 13 aufprägt.

Das Kurvenbahnsegment 24 ist an dem zwischen den Haspelsegmenten 5A, 5B angeordneten gemeinsamen Tragarm 16 angeordnet. Denkbar ist auch eine einteilige Ausführung des Tragarmes 16 und des Kurvenbahnsegmentes 24. Für eine Bewegung des Tragarmes 16 in horizontaler Richtung kann der Tragarm 16 einen teleskopierbaren Abschnitt aufweisen, der durch einen Linearaktor wie einen Hydraulikzylinder bewegbar ist. Hierzu kann das Kurvenbahnsegment 24 an dem teleskopierbaren Abschnitt des gemeinsamen Tragarmes 16 angeordnet sein, um dessen Bewegungen in vertikaler und/oder horizontaler Richtung zu folgen.

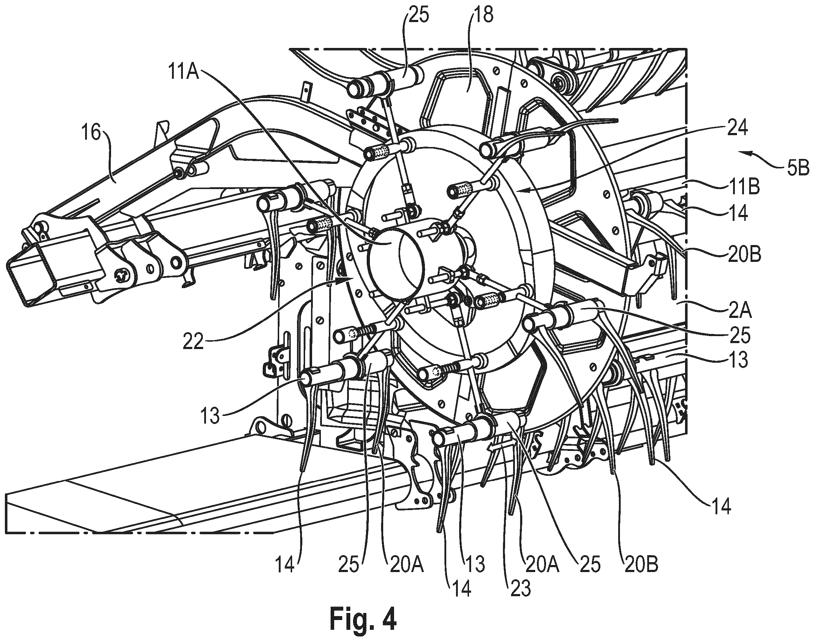

In Fig. 4 ist schematisch und exemplarisch eine perspektivische Ansicht der im Zwischenbereich der beiden benachbarten Haspelsegmente 5A, 5B angeordneten Verstelleinrichtung 24 gemäß Fig. 3 dargestellt.

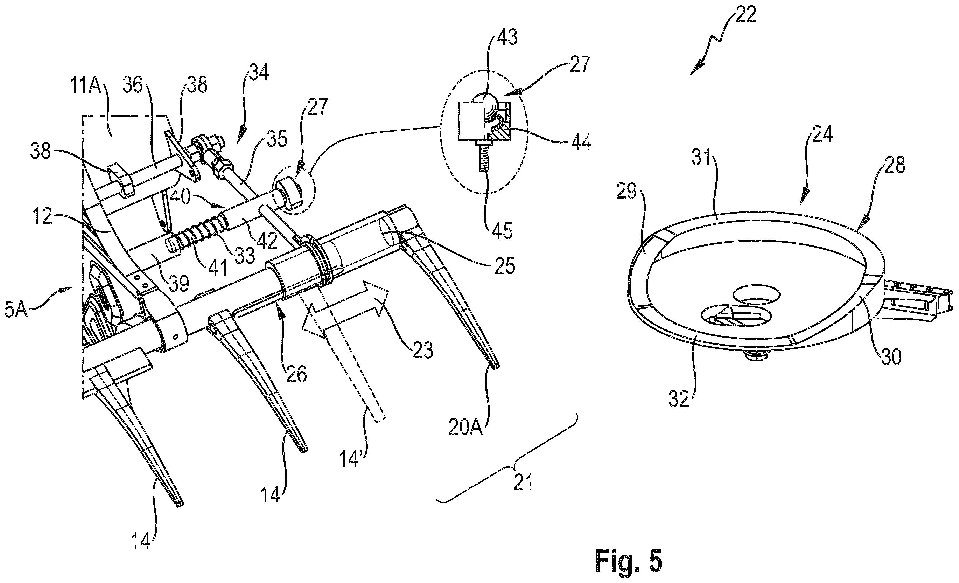

Die Darstellung in Fig. 5 zeigt schematisch und exemplarisch eine Detailansicht des Endzinkens 20A, eines Abtastelementes 27 der Verstelleinrichtung 22 sowie eine perspektivische Ansicht des Kurvenbahnsegmentes 24.

Die der Verstelleinrichtung 22 zugehörigen Komponenten und deren Funktionsweise werden nachfolgend insbesondere anhand der Fig. 4 und 5 näher erläutert.

Der jeweilige horizontal verschiebbare Endzinken 20A ist an einem rohrförmigen Element 25 angeordnet. Das rohrförmige Element 25 ist auf der Zinkenstange 13 relativ zu dieser in Axialrichtung 23 beweglich angeordnet. Um eine ungewollte Rotation des rohrförmigen Elementes 25 um die Längsachse der Zinkenstange 13 zu vermeiden, ist das rohrförmige Element 25 in radialer Richtung drehfest auf der Zinkenstange 13 angeordnet. Hierzu kann eine formschlüssige Verbindung, wie eine Nut-Feder-Verbindung 26 auf der Zinkenstange 13, vorgesehen sein, die eine Bewegung in Axialrichtung 23 ermöglicht und zugleich eine Bewegung des rohrförmigen Elementes 25 in Umfangsrichtung der Zinkenstange 13 verhindert.

Das Kurvenbahnsegment 24 weist eine kreisringförmige Abtastfläche 28 auf. Die kreisringförmige Abtastfläche 28 erstreckt sich ausgehend vom äußeren Umfang des Kurvenbahnsegmentes 24 abschnittsweise in radialer Richtung. Das rohrförmige Element 25 ist mit einem Abtastelement 27 verbunden, welches die kreisringförmige Abtastfläche 28 des Kurvenbahnsegmentes 24 abtastet.

Die kreisringförmige Abtastfläche 28 des Kurvenbahnsegmentes 24 ist durch zwei rampenförmige Abschnitte 29, 30 in einen ersten Führungsabschnitt 31 und einen zweiten Führungsabschnitt 32 unterteilt. Die rampenförmigen Abschnitte 29, 30 sind spiegelbildlich zueinander angeordnet. Die rampenförmigen Abschnitte 29, 30 weisen, in Umfangsrichtung gesehen, ausgehend vom ersten Führungsabschnitt 31 in Richtung des zweiten Führungsabschnitts 32 einen sich verjüngen Verlauf auf.

Der erste Führungsabschnitt 31 weist eine größere axiale Erstreckung in Richtung des Haspelsegmentes 5A auf als der zweite Führungsabschnitt 32. Der erste Führungsabschnitt 31 ist halbringförmig ausgebildet und erstreckt sich im Wesentlichen in einem Bereich oberhalb des Haspeltragrohres 11A abschnittsweise in Umfangsrichtung des Kurvenbahnsegmentes 24. Der zweite Führungsabschnitt 32 erstreckt sich bevorzugt zumindest über die untere Hälfte des Kurvenbahnsegmentes 24.

An dem rohrförmigen Element 25 kann ein zusätzlicher Haspelzinken 14' angeordnet sein, der zum Endzinken 20A axial beabstandet angeordnet ist. Der zusätzliche Haspelzinken 14' ist zwischen dem ortsfesten, zum rohrförmigen Element 25 benachbarten Haspelzinken 14 und dem Endzinken 20A an dem rohrförmigen Element 25 angeordnet. Durch die axiale Verschiebung des rohrförmigen Elementes 25 und damit des zusätzlichen Haspelzinkens 14' relativ zum benachbarten Haspelzinken 14 kann die Gutannahme im Zwischenbereich 21 weiter verbessert werden.

Die Verstelleinrichtung 22 umfasst Federelemente 33, welche das jeweilige Abtastelement 27 mit einer Kraft beaufschlagen. Die von den Federelementen 33 aufgebrachte Kraft hält das jeweilige Abtastelement 27 in einer am Kurvenbahnsegment 24 anliegenden, abtastenden Stellung.

Bei dem jeweiligen Federelement 33 handelt es sich bevorzugt um eine Druckfeder, durch welche das rohrförmige Element 25 vorgespannt wird. Mittels der Vorspannung wird das rohrförmige Element 25 mit dem daran angeordneten Abtastelement 27 gegen die kreisringförmige Abtastfläche 28 gedrückt. Dabei kann das Federelement 33 auf der jeweiligen Zinkenstange 13 zwischen dem Endzinken 20A und dem zu diesem unmittelbar benachbarten Haspelzinken 14 angeordnet sein.

Gemäß einer bevorzugten Weiterbildung kann jedem rohrförmigen Element 25 eine Stützanordnung 34 zugeordnet sein. Durch die Stützanordnung 34 kann ein Verkanten des jeweiligen rohrförmigen Elementes 25 beim Verschieben in Richtung des benachbarten Haspelsegmentes 5B vermieden werden, wenn sich das Abtastelement 27 entlang des ersten und zweiten Führungsabschnittes 31, 32 in Umfangsrichtung bewegt.

Die Stützanordnung 34 umfasst eine sich radial zum Haspeltragrohr 11A erstreckende Koppelstange 35, eine parallel zum Haspeltragrohr 11A verlaufende und an diesem angeordnete Führungsstange 36 sowie eine Vorspannanordnung 37. Die sich in radialer Richtung erstreckende Koppelstange 35 verbindet die Führungsstange 36, die Vorspannanordnung 37 und das rohrförmige Element 25 miteinander.

Die Koppelstange 35 erstreckt sich zwischen der Führungsstange 36 und dem zu verschiebenden rohrförmigen Element 25. Hierzu ist die Koppelstange 35 mit einem Ende an der Führungsstange 36 befestigt und mit dem anderen Ende an dem rohrförmigen Element 25. Dabei kann die Befestigung der Koppelstange 35 an dem rohrförmigen Element 25 bevorzugt lösbar ausgeführt sein. Zur lösbaren Befestigung kann ein Klemmring oder dergleichen verwendet werden. Die Führungsstange ist 36 in zwei zueinander beabstandeten Loslagerstellen 38 am Haspeltragrohr 11A axial verschiebbar gelagert.

Die Übertragungsanordnung 37 umfasst einen hohlzylindrischen Abschnitt 39, der am Haspelstern 12 befestigt ist. In dem hohlzylindrischen Abschnitt 39 ist ein Schaft 40 in Axialrichtung 23 relativbeweglich angeordnet. Der Schaft 40 weist einen ersten Abschnitt 41 mit einem ersten Durchmesser und einen zweiten Abschnitt 42 mit einem zweiten Durchmesser auf, der größer als der erste Durchmesser ist. Durch den zweiten Abschnitt 42 des Schaftes 40 erstreckt sich die Koppelstange 35 hindurch. Am freien Ende des zweiten Abschnittes 42 ist das Abtastelement 27 angeordnet.

Wie die Detailansicht des Abtastelementes 27 in Fig. 5 zeigt, kann das Abtastelement 27 als eine Kugel 43 ausgeführt sein. Denkbar ist auch eine Ausführung des Abtastelementes 27 als eine Halbkugel. Die Kugel 43 ist in einer Halterung 44, insbesondere gleitend gelagert, angeordnet. Ein Gewindeabschnitt 45 an der Halterung 44 ermöglicht es, diese in den zweiten Abschnitt 42 des Schaftes 40 einzuschrauben. Dies ermöglicht einen Austausch des Abtastelementes 27, welches ein mögliches Verschleißteil der Verstellvorrichtung 22 bildet.

**Bezugszeichenliste**

| | | | |
|---|---|---|---|
| 1 | Schneidwerk | 28 | Abtastfläche |
| 2 | Rahmen | 29 | Rampenförmiger Abschnitt |
| 2A | Rückwand | 30 | Rampenförmiger Abschnitt |
| 3 | Seitenteil | 31 | Erster Führungsabschnitt |
| 4 | Messerbalken | 32 | zweier Führungsabschnitt |
| 5 | Haspel | 33 | Federelement |
| 5A | Haspelsegment | 34 | Stützanordnung |
| 5B | Haspelsegment | 35 | Koppelstange |
| 6A | Seitenabschnitt | 36 | Führungsstange |
| 6B | Seitenabschnitt | 37 | Vorspannanordnung |
| 7 | Förderband | 38 | Loslagerstelle |
| 8 | Mittelabschnitt | 39 | Hohlzylindrischer Abschnitt |
| 9 | Öffnung | 40 | Schaft |
| 10 | Halmteiler | 41 | Erster Abschnitt |
| 11A | Haspeltragrohr | 42 | Zweiter Abschnitt |
| 11B | Haspeltragrohr | 43 | Kugel |
| 12 | Haspelstern | 44 | Halterung |
| 13 | Zinkenstange | 45 | Gewindeabschnitt |
| 14, 14' | Haspelzinken | | |
| 15 | Tragarm | | |
| 16 | Tragarm | | |
| 17 | Linearaktor | | |
| 18 | Zwischenscheibe | | |
| 19 | Schwenkachse | | |
| 20A | Endzinken | | |
| 20B | Endzinken | | |
| 21 | Zwischenbereich | | |
| 22 | Verstelleinrichtung | | |
| 23 | Axialrichtung | | |
| 24 | Kurvenbahnsegment | | |
| 25 | Rohrförmiges Element | | |
| 26 | Nut-Feder-Verbindung | | |
| 27 | Abtastelement | | |

## Patentansprüche

1. Schneidwerk (1), umfassend einen sich zwischen Seitenteilen (3) erstreckenden Rahmen (2) sowie eine sich zwischen den Seitenteilen (3) erstreckende Haspel (5), die zumindest zwei Haspelsegmente (5A, 5B) aufweist, die an zumindest einem zwischen diesen angeordneten Tragarm (16) angeordnet sind, wobei jedes Haspelsegment (5A, 5B) ein Haspeltragrohr (11A, 11B), mehrere sich über die Breite des jeweiligen Haspelsegmentes (5A, 5B) erstreckende Zinkenstangen (13) mit an den Zinkenstangen (13) mit Abstand zueinander angeordneten Haspelzinken (14, 14') umfasst, wobei im Endbereich zweier benachbarter Haspelsegmente (5A, 5B) an einander zugewandten Enden der Haspeltragrohre (11A, 11B) jeweils wenigstens ein Endzinken (20, 20B) an den Zinkenstangen (13) angeordnet ist, **dadurch gekennzeichnet, dass** der jeweilige Endzinken (20A, 20B) nur eines der benachbarten Haspelsegmente (5A, 5B) in Axialrichtung (23) der Haspeltragrohre (11A, 11B) relativbeweglich auf diesen angeordnet ist, wobei dem Endbereich des Haspelsegmentes (5A, 5B) mit den axial verschiebbaren Endzinken (20A, 20B) eine Verstelleinrichtung (22) zum axialen Verschieben der Endzinken (20A, 20B) zugeordnet ist.

2. Schneidwerk (1) nach Anspruch 1, **dadurch gekennzeichnet, dass** die Verstelleinrichtung (22) ein Kurvenbahnsegment (24) aufweist, welches den axial verschiebbaren Endzinken (20A, 20B) des Haspelsegmentes (5A, 5B) eine eindimensionale Horizontalbewegung in Axialrichtung (23) der Haspeltragrohre (11A, 11B) aufprägt.

3. Schneidwerk (1) nach Anspruch 1 oder 2, **dadurch gekennzeichnet, dass** die Verstelleinrichtung (22) endseitig auf den Zinkenstangen (13) angeordnete in Axialrichtung (23) verschiebbar rohrförmige Elemente (25) aufweist, an denen der jeweilige Endzinken (20A, 20B) angeordnet ist, wobei die rohrförmigen Elemente (25) durch die Zinkenstangen (13) axial geführt sind.

4. Schneidwerk (1) nach Anspruch 3, **dadurch gekennzeichnet, dass** der wenigstens eine Endzinken (20A, 20B) am dem Kurvenbahnsegment (24) zugewandten äußeren Ende des rohrförmigen Elementes (25) angeordnet ist.

5. Schneidwerk (1) nach Anspruch 3 oder 4, **dadurch gekennzeichnet, dass** das jeweilige rohrförmige Element (25) mit einem Abtastelement (27) verbunden ist, welches das Kurvenbahnsegment (24) abtastet.

6. Schneidwerk (1) nach einem der Ansprüche 3 bis 5, **dadurch gekennzeichnet, dass** an dem rohrförmigen Element (25) ein zusätzlicher Haspelzinken (14') angeordnet ist, der zum Endzinken (20A, 20B) axial beabstandet angeordnet ist.

7. Schneidwerk (1) nach einem der Ansprüche 4 bis 6, **dadurch gekennzeichnet, dass** die Verstelleinrichtung (22) Federelemente (33) umfasst, welche das jeweilige Abtastelement (27) mit einer Kraft beaufschlagen, welche das jeweilige Abtastelement (27) in einer am Kurvenbahnsegment (24) anliegenden Stellung hält.

8. Schneidwerk (1) nach Anspruch 7, **dadurch gekennzeichnet, dass** zumindest ein Federelement (33) auf der jeweiligen Zinkenstange (13) zwischen dem Endzinken (20A, 20B) und dem zu diesem unmittelbar benachbarten Haspelzinken (14) angeordnet ist.

9. Schneidwerk (1) nach einem der Ansprüche 2 bis 8, **dadurch gekennzeichnet, dass** das Kurvenbahnsegment (24) an dem zwischen den Haspelsegmenten (5A, 5B) angeordneten Tragarm (16) angeordnet ist.

10. Schneidwerk (1) nach Anspruch 9, **dadurch gekennzeichnet, dass** das Kurvenbahnsegment (24) an einem, insbesondere teleskopierbaren, Abschnitt des Tragarmes (16) angeordnet ist oder das Kurvenbahnsegment (24) und der, insbesondere teleskopierbare, Abschnitt des Tragarmes (16) einteilig ausgeführt sind.

11. Schneidwerk (1) nach einem der Ansprüche 2 bis 10, **dadurch gekennzeichnet, dass** das Kurvenbahnsegment (24) eine kreisringförmige Abtastfläche (28) aufweist, die durch zwei rampenförmige Abschnitte (29, 30) in einen ersten Führungsabschnitt (31) und einen zweiten Führungsabschnitt (32) unterteilt ist, wobei der erste Führungsabschnitt (31) eine größere axiale Erstreckung in Richtung des Haspeltragrohres (11A, 11B) aufweist als der zweite Führungsabschnitt (32).

12. Schneidwerk (1) nach Anspruch 11, **dadurch gekennzeichnet, dass** der erste Führungsabschnitt (31) halbringförmig ausgebildet ist und sich im Wesentlichen in einem Bereich oberhalb des Haspeltragrohres (11A, 11B) abschnittsweise in Umfangsrichtung erstreckt.

13. Schneidwerk (1) nach Anspruch 11 oder 12, **dadurch gekennzeichnet, dass** die rampenförmigen Abschnitte (29, 30) ausgehend vom ersten Führungsabschnitt (31) in Richtung des zweiten Führungsabschnitts (32) einen sich verjüngen Verlauf aufweisen und zwischen sich einen zum ersten Führungsabschnitt (31) im Wesentlichen parallelen Verlauf aufweisen.

14. Schneidwerk (1) nach einem der Ansprüche 2 bis 13, **dadurch gekennzeichnet, dass** jedem rohrförmigen Element (25) eine Stützanordnung (34) zugeordnet ist.

15. Schneidwerk (1) nach Anspruch 14, **dadurch gekennzeichnet, dass** die Stützanordnung (34) eine sich radial zum Haspeltragrohr (11A, 11B) erstreckende Koppelstange (35), eine parallel zum Haspeltragrohr (11A, 11B) verlaufende und an diesem angeordnete Führungsstange (36) sowie eine Vorspannanordnung (37) umfasst.
